# EUROPEAN PATENT SPECIFICATION

(11) **EP 2 746 141 B1**
(45) Date of publication and mention of the grant of the patent: **18.01.2017**
(21) Application number: 11870862.7
(22) Date of filing: 15.08.2011
(51) Int. Cl.: B62J 27/00, F16H 57/04, B62J 31/00, B62M 7/02

(54) **ELECTRIC MOTORCYCLE**
ELEKTROMOTORRAD
MOTO ÉLECTRIQUE

(43) Date of publication of application: 25.06.2014
(73) Proprietor: Kawasaki Jukogyo Kabushiki Kaisha, Kobe-shi, Hyogo 650-8670 (JP)
(72) Inventor: NITTA, Takahiro, Intellectual Property Section 1-1, Kawasaki-cho, Akashi-shi Hyogo 673-8666 (JP); KAWAI, Daisuke, Hyogo 673-8666 (JP)
(74) Representative: Witte, Weller & Partner Patentanwälte mbB
(86) International application number: PCT/JP2011/004586
(87) International publication number: WO 2013/024507

(56) References cited:
- EP-A2- 2 131 071
- JP-A- H04 166 407
- JP-A- H07 117 558
- JP-A- H07 117 558
- JP-A- 2008 105 457
- JP-A- 2009 287 504

## Description

### Technical Field

The present invention relates to an electric motorcycle including an electric driving motor as a driving source, or an hybrid electric motorcycle including an engine in addition to the electric driving motor.

### Background Art

In an exemplary conventional electric motorcycle, a hydraulic pump of the electric motorcycle is activated by a driving motor. This hydraulic pump is used to cool and lubricate, for example, a driving system. In this electric motorcycle, when a main switch (power supply switch) is turned ON before driving, the driving motor is in an OFF-state and is deactivated (in a stopped state), and therefore the hydraulic pump is also deactivated. For this reason, a hydraulic pressure (oil pressure) detector detects a decrease in a hydraulic pressure in an oil passage and a warning light is turned ON. This causes a driver to misunderstand that there is a failure in the hydraulic pump even in a case where there is no failure in the hydraulic pump.

In the case of another electric motorcycle in which a hydraulic pump is activated by a pump motor which is different from the driving motor and oil discharged from this hydraulic pump is used to cool and lubricate a driving system, it is not necessary to activate the hydraulic pump, and thus, the hydraulic pump is deactivated before the driving motor is activated (when the driving motor is deactivated). In a case where the hydraulic pump is deactivated under a state in which the driving motor is deactivated, a hydraulic pressure detector detects a decrease in a hydraulic pressure in an oil passage and a warning light is turned ON, as in the above case. This causes the driver to misunderstand that there is a failure in the hydraulic pump even in a case where there is no failure in the hydraulic pump.

In a case where the warning light is ON after the hydraulic pressure detector has detected a decrease in the hydraulic pressure in the oil passage, a seizure of sliding portions in the driving system or abnormal heat generation in the driving motor occurs, if the electric motorcycle is caused to drive under a state in which there is a failure in a hydraulic circuit. Therefore, there exists a problem that this electric motorcycle cannot drive when it is transported to an inspection place.

Cited Literature 1 (Japanese-Laid Open Patent Application Publication No. Hei. 5-330348) discloses a hydraulic control device in a hybrid vehicle including a driving motor. This hydraulic control device is able to improve a performance of an electric motor and increase its life, by efficiently utilizing oil for cooling an engine transmission system as oil for cooling an electric motor.

Document JPH07117558A shows an electric motorcycle comprising:a hydraulic pump; an oil passage through which oil forcibly fed by the hydraulic pump flows: a hydraulic pressure detecting device for detecting a hydraulic pressure in the oil passage.

### Citation List

### Patent Literature

Patent Literature 1: Japanese-Laid Open Patent Application Publication No. Hei 5-330348

### Summary of Invention

### Technical Problem

However, in the conventional hydraulic control device disclosed in the above stated Cited Literature 1, when the hydraulic pump is deactivated in a normal state and the hydraulic pressure in the oil passage is decreased, for example, before driving, the warning light which warns about the decrease in the hydraulic pressure is not inhibited from being be turned ON. In addition, Cited Literature 1 does not disclose a method of transporting the electric motorcycle in which there is a failure in the hydraulic circuit including the hydraulic pump to the inspection place.

The present invention has been developed to solve the above described problem, and an object of the present invention is to provide an electric motorcycle configured not to display warning information for warning about a decrease in a hydraulic pressure when a hydraulic pump is deactivated in a normal state and a hydraulic pressure in an oil passage is decreased.

### Solution to Problem

An electric motorcycle of the present invention comprises a hydraulic pump; an oil passage through which oil forcibly fed by the hydraulic pump flows: a hydraulic pressure detecting device for detecting a hydraulic pressure in the oil passage; a hydraulic pressure determiner unit for determining whether or not a value of the hydraulic pressure detected by the hydraulic pressure detecting device is less than a first allowable value; a pump state determiner unit for determining whether or not an activation command is output to the hydraulic pump; and a warning output device for outputting a warning signal according to a result of the determination performed by the hydraulic pressure determiner unit and a result of the determination performed by the pump state determiner unit; wherein the warning output device does not output the warning signal when the pump state determiner unit determines that the activation command is not output to the hydraulic pump and the hydraulic pressure determiner unit determines that the value of the hydraulic pressure in the oil passage is less than the first allowable value; and the warning output device outputs the warning signal when the pump state determiner unit determines that the activation command is output to the hydraulic pump and the hydraulic pressure determiner unit determines that the value of the hydraulic pressure in the oil passage is less than the first allowable value.

In accordance with the electric motorcycle of the present invention, even when the value of the hydraulic pressure detected by the hydraulic pressure detecting device is less than the first allowable value, under a state in which the activation command is not output to the hydraulic pump, for example, during starting (before driving), it cannot be determined that there is a failure or an abnormality in the hydraulic circuit including this hydraulic pump. Therefore, the warning output device does not output the warning signal.

This makes it possible to avoid a situation in which a driver misunderstands that there is a failure or an abnormality in the hydraulic circuit including the hydraulic pump, although it is in a normal state.

However, when the hydraulic pressure in the oil passage is less than the first allowable value under a state in which the activation command is output to the hydraulic pump, it can be determined that there is a failure or an abnormality in the hydraulic circuit including this hydraulic pump. Therefore, the warning output device outputs the warning signal.

This allows the driver to accurately recognize that there is a failure or an abnormality in the hydraulic circuit including the hydraulic pump, when there is actually a failure or an abnormality in the hydraulic circuit including the hydraulic pump.

The electric motorcycle of the present invention may comprise a pump control unit for controlling activation of the hydraulic pump; wherein the pump control unit activates the hydraulic pump before driving; and the hydraulic pressure determiner unit may determine whether or not the value of the hydraulic pressure in the oil passage is less than the first allowable value, after the hydraulic pump is activated.

Since the pump control unit is configured to be able to activate the hydraulic pump before driving of the electric motorcycle, the hydraulic circuit including the hydraulic pump can be inspected after the hydraulic pump is activated, for example, before driving. This makes it possible to avoid a situation in which a failure or an abnormality will occur in, for example, a driving system such as the driving motor, when the electric motorcycle is driving.

In the electric motorcycle of the present invention, the hydraulic pressure detecting device may be a hydraulic sensor; and the hydraulic pressure determiner unit may determine whether or not the value of the hydraulic pressure in the oil passage is less than the first allowable value, based on a value of the hydraulic pressure detected by the hydraulic pressure detecting device.

In this configuration, various high-level control can be implemented by utilizing the value of the hydraulic pressure in the oil passage which is detected by the hydraulic sensor, which control cannot not be implemented by a hydraulic pressure switch which outputs only an ON-value or an OFF-value. For example, the value of the hydraulic pressure in the oil passage can be displayed in the display section, or torque generated in the hydraulic pump can be controlled based on the value of the hydraulic pressure. Furthermore, the hydraulic pressure determiner unit can set two or more allowable values which are reference values used to determine the hydraulic pressure in the oil passage.

In the electric motorcycle of the present invention, the oil passage connected to an outlet of the hydraulic pump may be provided with a filter, and a hydraulic oil inlet of the driving motor or a hydraulic oil inlet of a transmission in this order from an upstream side; and the hydraulic pressure detecting device may be provided at either one of or both of a first mounting position which is between the outlet and the filter and a second mounting position which is between the filter and the hydraulic oil inlet.

By providing the hydraulic sensor as the hydraulic pressure detecting device at the first mounting position or the second mounting position, the hydraulic pressure determiner unit can determine whether the hydraulic pressure at each of the mounting positions is equal to or less than a predetermined allowable value set to the first allowable value or a value which is other than the first allowable value. In a case where the hydraulic pressure detecting device is provided at the first mounting position which is between the outlet of the hydraulic pump and the filter, it can be determined whether or not there is a failure or an abnormality in the hydraulic pump. In a case where the hydraulic pressure detecting device is provided at the second mounting position which is between the filter and the hydraulic oil inlet of the driving motor or the transmission, it can be determined whether or not there is a failure or an abnormality in at least one of the hydraulic pump and the filter. Moreover, when the value of the hydraulic pressure at the first mounting position is equal to or greater than the first allowable value and the value of the hydraulic pressure at the second mounting position is less than the first allowable value, in the configuration in which the hydraulic sensors are provided at the first mounting position and the second mounting position, respectively, it can be determined that the filter is clogged with foreign matters.

The electric motorcycle of the present invention may comprise a second hydraulic pressure determiner unit for determining whether or not the value of the hydraulic pressure in the oil passage is less than a second allowable value; and a torque control unit for suppressing torque of the driving motor when the second hydraulic pressure determiner unit determines that the value of the hydraulic pressure in the oil passage is less than the second allowable value.

In this configuration, when the value of the hydraulic pressure in the oil passage is less than the second allowable value, the torque control unit suppress the torque of the driving motor. Thus, the electric motorcycle is allowed to drive at a low speed and transported to, for example, an inspection place, while avoiding occurrence of a failure or an abnormality in components to be lubricated.

In the electric motorcycle of the present invention, the hydraulic pressure detecting device may be a hydraulic sensor; and the torque control unit may decide a degree to which the torque is suppressed based on a value of the hydraulic pressure detected by the hydraulic pressure detecting device.

In this configuration, the driving motor can be activated by the torque suppressed properly according to the value of the hydraulic pressure detected by the hydraulic pressure detecting device.

In the electric motorcycle of the present invention, the oil passage may be a passage used to lubricate or cool a driving system; and the torque control unit may inhibit the torque from being suppressed, before a predetermined time passes after the hydraulic pump starts to operate.

In this configuration, it becomes possible to avoid a situation in which the torque suppressing control is executed even though there is no abnormality in the hydraulic circuit, and thereby the driver's acceleration feeling during starting gets worse, when the electric motorcycle starts to move immediately after the hydraulic pump starts to operate, in a case where some time passes from when the hydraulic pump starts to operate until a pressure in the hydraulic circuit reaches a specified pressure.

### Advantageous Effects of Invention

In accordance with an electric motorcycle of the present invention, when a hydraulic pressure in an oil passage is decreased under a state in which a hydraulic pump is deactivated in a normal state, warning information which warns about a decrease in the hydraulic pressure is not output. Thus, it becomes possible to avoid a situation in which a driver misunderstands that there is a failure or an abnormality. In addition, when there is actually a failure or an abnormality in a hydraulic circuit including a hydraulic pump, the driver can accurately recognize that there is actually a failure or an abnormality in the hydraulic circuit including the hydraulic pump.

### Brief Description of Drawings

[Fig. 1] Fig. 1 is a block diagram showing a hydraulic circuit including a hydraulic pump and an electric circuit in an electric motorcycle according to Embodiment 1 of the present invention.
[Fig. 2] Fig. 2 is a flowchart showing control of a hydraulic circuit inspection function before starting of a driving motor in the electric motorcycle according to Embodiment 1.
[Fig. 3] Fig. 3 is a flowchart showing control of a torque suppressing function after starting of the driving motor in the electric motorcycle according to Embodiment 1.
[Fig. 4] Fig. 4 is a view showing a result of a determination in the flow chart of Fig. 2.
[Fig. 5] Fig. 5 is a block diagram showing an oil passage including a hydraulic pump and an electric circuit in an electric motorcycle according to Embodiment 2 of the present invention.
[Fig. 6] Fig. 6 is a view showing a result of a determination before starting of the driving motor in the electric motorcycle according to Embodiment 2, shown in Fig. 5
[Fig. 7] Fig. 7 is a view showing a result of a determination before starting of the driving motor in the electric motorcycle according to Embodiment 2, shown in Fig. 5.

### Description of Embodiments

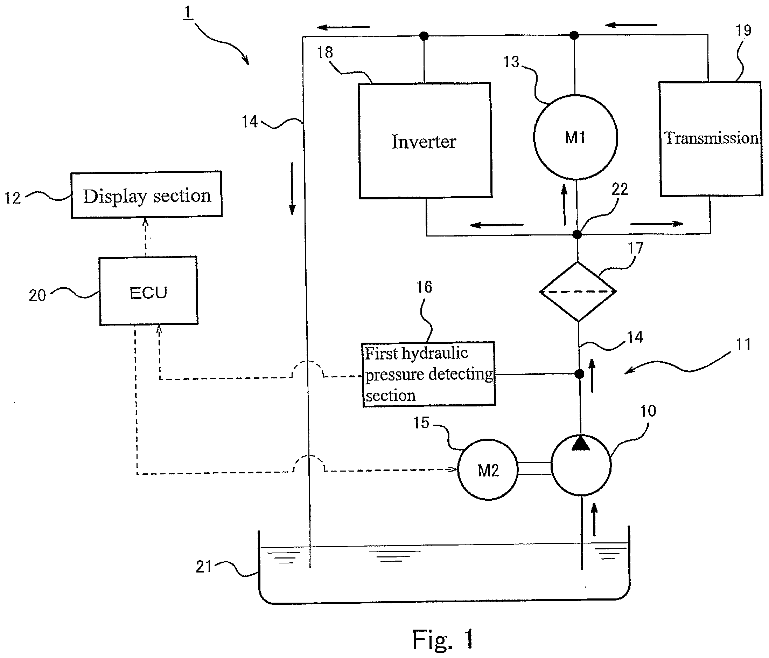

Hereinafter, an electric motorcycle according to Embodiment 1 of the present invention will be described with reference to Figs. 1 to 4. This electric motorcycle 1 has a hydraulic circuit inspection function which enables the display section 12 to display information indicating whether or not a hydraulic circuit 11 including a hydraulic pump 10 and an oil passage 14 is in a normal state, and a torque suppressing function which enables the electric motorcycle 1 to drive properly when it is determined that there is an abnormality in the hydraulic circuit 11 including the hydraulic pump 10.

The hydraulic circuit inspection function is to inhibit the display section 12 from outputting warning information which warns about a decrease in a hydraulic pressure (oil pressure) in the oil passage 14 (display section 12 from being turned ON) when the hydraulic pump 10 used to cool and lubricate a driving system is deactivated in a normal state and the hydraulic pressure in the oil passage 14 is decreased, under a state in which the driving motor 13 is deactivated, for example, before driving.

The torque suppressing function is to suppress torque of the driving motor 13 by suppressing maximum output torque of the electric motorcycle 1 to allow the electric motorcycle 1 to be moved to, for example, an inspection place, even when it is determined that there is an abnormality in the hydraulic circuit 11 including the hydraulic pump 10. This electric motorcycle 1 includes the electric driving motor 13 as a driving source, but may be a hybrid electric motorcycle including an engine in addition to the electric driving motor.

As shown in Fig. 1, the electric motorcycle 1 includes the hydraulic pump 10, a pump motor 15, the oil passage 14, a first hydraulic pressure detecting section 16, an oil filter 17, an inverter 18, the driving motor 13, a transmission 19, an ECU 20, and the display section 12.

The oil passage 14 is provided with the hydraulic pump 10, the first hydraulic pressure detecting section 16, and the oil filter 17 in this order from an upstream side. The oil passage 14 is provided at its downstream side with a hydraulic oil inlet of the inverter 18, a hydraulic oil inlet of the driving motor 13, and a hydraulic oil inlet of the transmission 19 such that these hydraulic oil inlets are arranged in parallel. These hydraulic oil inlets are connected to one flow dividing section 22 provided on the oil passage 14.

As shown in Fig. 1, the hydraulic pump 10 is activated by the pump motor 15 to forcibly feed oil suctioned from an oil pan 21 to the inverter 18, the driving motor 13, the transmission 19, etc., via the oil passage 14 and return the oil to the oil pan 21 via the oil passage 14. The inverter 18 is cooled by the fed oil, while the driving motor 13 and the transmission 19 are cooled and lubricated by the fed oil.

The first hydraulic pressure detecting section 16 is, for example, a hydraulic sensor. The first hydraulic pressure detecting section 16 is provided at a first mounting position which is between an outlet of the hydraulic pump 10 and the oil filter 17 to detect a value of the hydraulic pressure (oil pressure) in a portion of the oil passage 14 which is between the outlet of the hydraulic pump 10 and the oil filter 17. Instead of the hydraulic sensor, the first hydraulic pressure detecting section 16 may be a hydraulic pressure switch as will be described later.

The oil filter 17 is configured to remove sludge, abrasion powder, trash, and others from the oil discharged from the hydraulic pump 10. The driving motor 13 is configured to drive the electric motorcycle 1. The inverter 18 is configured to control a rotational speed of the driving motor 13. The transmission 19 is a device for changing a reduction gear ratio of a rotational speed of a wheel with respect to a rotational speed of an output shaft of the driving motor 13.

The ECU 20 is an electronic control unit for controlling the electric motorcycle 1. The ECU 20 is configured to perform various processing according to programs pre-stored. The ECU 20 includes a pump control section, a first hydraulic pressure determiner section, a pump state determiner section, a warning output section, a second hydraulic pressure determiner section, and a torque control section.

The pump control section is configured to control activation of the hydraulic pump 10 and allows the hydraulic pump 10 to be activated before driving of the electric motorcycle 1. The phrase "before driving of the electric motorcycle 1" refers to, for example, a state in which, a main switch (power supply switch) is ON, and a displacement amount of an accelerator which is detected by an accelerator sensor is zero (fully closed).

The first hydraulic pressure determiner section is configured to determine whether or not the value of the hydraulic pressure which is detected by the first hydraulic pressure detecting section 16 is less than a first allowable value before driving and during driving. In the present embodiment, since the first hydraulic pressure detecting section 16 is the hydraulic sensor, it is able to detect the value of the hydraulic pressure. The first hydraulic pressure determiner section is able to determine whether or not the value of the hydraulic pressure which is detected by the first hydraulic pressure detecting section 16 is less than the first allowable value.

The pump state determiner section is configured to determine whether or not the pump control section is outputting an activation command to the hydraulic pump 10.

The warning output section is configured to output a warning signal to the display section 12 connected to the ECU 20 to cause the display section 12 to display specified warning information, according to a result of the determination performed by the first hydraulic pressure determiner section and a result of the determination performed by the pump state determiner section. The display section 12 does not display warning information corresponding to the warning signal when the warning output section is not outputting the warning signal.

For example, when the pump control section is not outputting the activation command to the hydraulic pump 10, and the first hydraulic pressure determiner section determines that the value of the hydraulic pressure in the oil passage 14 is less than the first allowable value, it is determined that the hydraulic circuit 11 including the hydraulic pump 10 and the oil passage 14, shown in Fig. 1, is in a normal state, and therefore the warning output section does not output the warning signal. On the other hand, when the pump control section is outputting the activation command to the hydraulic pump 10, and the first hydraulic pressure determiner section determines that the value of the hydraulic pressure in the oil passage 14 is less than the first allowable value, it is determined that the hydraulic circuit 11 is in an abnormal state, and the warning output section outputs the warning signal. The abnormal state of the hydraulic circuit 11 may include, for example, clogging of the oil filter 17, and a leakage of the oil which is caused by damages to the oil passage 14 (pipe) constituting the hydraulic circuit 11.

When the pump control section is outputting the activation command to the hydraulic pump 10, and the first hydraulic pressure determiner section determines that the value of the hydraulic pressure in the oil passage 14 is equal to or greater than the first allowable value, it can be determined that the hydraulic circuit 11 including the hydraulic pump 10 is in a normal state. Therefore, the warning output section does not output the warning signal and the display section 12 does not display the warning information. This allows the driver to accurately recognize that the hydraulic circuit 11 including the hydraulic pump 10 is in a normal state.

The display section 12 has display parts corresponding to, for example, the hydraulic pump 10, the oil passage 14, the first hydraulic pressure detecting section 16 and the oil filter 17, respectively. When the warning signal is input, the corresponding display part is turned ON. The above is the hydraulic circuit inspection function.

Next, the torque suppressing function of the ECU 20 of Fig. 1 will be described. The torque suppressing function is implemented by the first hydraulic pressure determiner section, a second hydraulic pressure determiner section, and the torque control section.

The second hydraulic pressure determiner section is configured to determine whether or not the value of the hydraulic pressure in the oil passage 14 which is detected by the first hydraulic pressure detecting section 16 of Fig. 1 is less than a second allowable value. The second allowable value is smaller than, for example, the first allowable value.

The torque control section is configured to suppress the torque of the driving motor 13 when the first hydraulic pressure determiner section determines that the hydraulic pressure in the oil passage 14 is less than the first allowable value, during driving. The second hydraulic pressure determiner section determines whether or not the hydraulic pressure is less than the second allowable value. Based on a result of the determination, the torque control section sets output torque such that a degree to which the torque is suppressed is made different

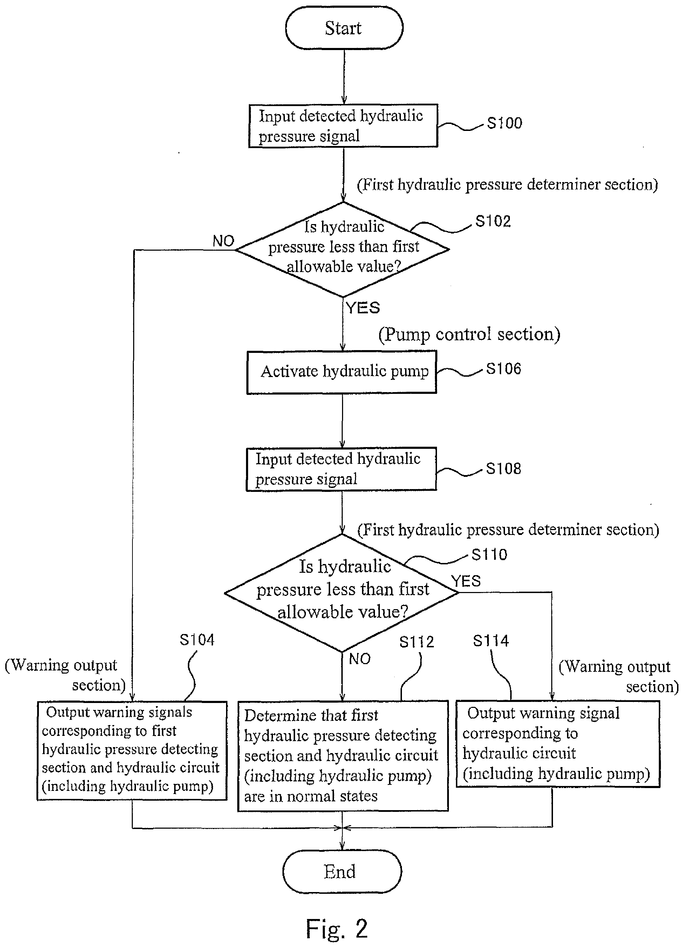

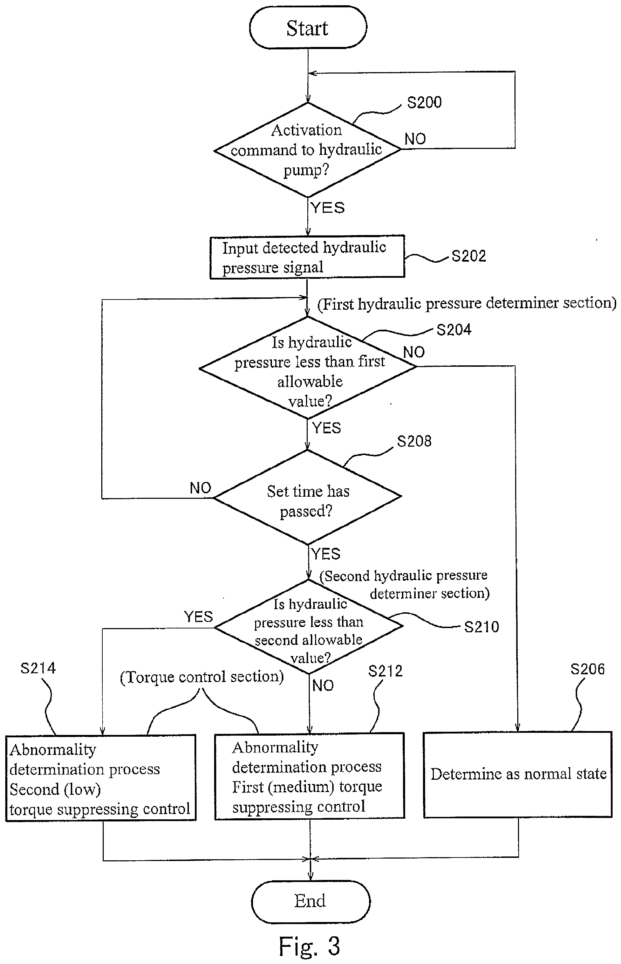

Next, the operation of the electric motorcycle 1 configured as described above will be described with reference to Figs. 1 to 4. Fig. 2 is a flowchart showing control of the hydraulic circuit inspection function before starting (driving) of the driving motor 13. Fig. 3 is a flowchart showing control of the torque suppressing function after starting (during driving) of the driving motor 13.

It is assumed that in the control of the hydraulic circuit inspection function before starting of the driving motor 13 of Fig. 2, for example, the electric motorcycle 1 is now starting (before driving), the main switch (power supply switch) is ON, and the displacement amount of the accelerator which is detected by the accelerator sensor is zero (fully closed). The pump control section is not activating the hydraulic pump 10, and therefore, the pump state determiner section determines that the pump control section is not outputting the activation command to the hydraulic pump 10.

Under this state, the value of the hydraulic pressure in the oil passage 14 which is detected by the first hydraulic pressure detecting section 16 of Fig. 1 is input to the ECU20 as a detected hydraulic pressure signal (step S100). The first hydraulic pressure determiner section determines whether or not the value of the hydraulic pressure which is detected by the first hydraulic pressure detecting section 16 is less than the first allowable value (step S102). When the first hydraulic pressure determiner section determines that the value of the hydraulic pressure is equal to or greater than the first allowable value, i.e., a result of the determination is "NO", the warning output section outputs a warning signal indicating that either one of or both of the first hydraulic pressure detecting section 16 and the hydraulic circuit 11 (including the hydraulic pump 10) is/are in abnormal state(s), to the display section 12, to cause the display unit 12 to display information indicating that either one of or both of the first hydraulic pressure detecting section 16 and the hydraulic circuit 11 is/are in abnormal state(s) (step S104).

In step S102, when the first hydraulic pressure determiner section determines that the value of the hydraulic pressure in the oil passage 14 is less than the first allowable value, i.e., a result of the determination is "YES", under a state in which the pump control section is not outputting the activation command to the hydraulic pump 10, the warning output section does not output the warning signal at this point of time. It should be noted that at this point of time, it is determined that at least the first hydraulic pressure detecting section 16 is in a normal state (this is not shown).

In step S102, when the first hydraulic pressure determiner section determines that the value of the hydraulic pressure is less than the first allowable value, i.e., a result of the determination is "YES", the pump control section activates the hydraulic pump 10 (step S106). Then, after a passage of predetermined time (e.g., about 5 seconds), the first hydraulic pressure determiner section determines whether or not the value of the hydraulic pressure which is detected by the first hydraulic pressure detecting section 16 is less than the first allowable value (step S108, step S110). When the first hydraulic pressure determiner section determines that the value of the hydraulic pressure is equal to or greater than the first allowable value, i.e., a result of the determination is "NO", it can be determined that the hydraulic circuit 11 including the hydraulic pump 10 and the first hydraulic pressure detecting section 16 are in normal states. Therefore, the warning output section does not output the warning signal, and the display section 12 is OFF, which indicates that the hydraulic circuit 11 and the first hydraulic pressure detecting section 16 are in normal states (step S 112).

In the above described manner, the driver can accurately recognize that the first hydraulic pressure detecting section 16 and the hydraulic circuit 11 including the hydraulic pump 10, shown in Fig. 1, are in normal states during starting (before driving).

In step S110, when the first hydraulic pressure determiner section determines that the value of the hydraulic pressure is less than the first allowable value, i.e., a result of the determination is "YES", the warning output section outputs a warning signal indicating that the hydraulic circuit 11 including the hydraulic pump 10 is in an abnormal state, to the display section 12, to cause the display section 12 to display information indicating that the hydraulic circuit 11 including the hydraulic pump 10 is in an abnormal state (step S 114).

Since it has been determined as "YES" and that the first hydraulic pressure detecting section 16 is in a normal state, in step S102, a warning signal corresponding to the first hydraulic pressure detecting section 16 is not output, at this time.

As described above, even when the value of the hydraulic pressure detected by the first hydraulic pressure detecting section 16 is less than the first allowable value (YES in step 102), in the case where the activation command is not output to the hydraulic pump 10, for example, during starting (before driving), it cannot be determined that there is a failure or an abnormality in the hydraulic circuit 11 including the hydraulic pump 10. Therefore, the warning output section does not output the warning signal.

This makes it possible to avoid a situation in which the driver misunderstands that there is a failure or an abnormality in the hydraulic circuit 11 including the hydraulic pump 10, although it is in a normal state.

On the other hand, when the value of the hydraulic pressure in the oil passage 14 is less than the first allowable value under a state in which the activation command is output to the hydraulic pump 10 (YES in step S110), it can be determined that there is a failure or an abnormality in the hydraulic circuit 11 including the hydraulic pump 10. Therefore, the warning output section outputs the warning signal.

This allows the driver to accurately recognize that there is a failure or an abnormality in the hydraulic circuit 11 including the hydraulic pump 10, when there is actually a failure or an abnormality in the hydraulic circuit 11 including the hydraulic pump 10.

Since the pump control section is configured to be able to activate the hydraulic pump 10 before driving of the electric motorcycle 1 (step S106), the hydraulic circuit 11 including the hydraulic pump 10 can be inspected before driving. This makes it possible to avoid a situation in which a failure or an abnormality will occur in, for example, the driving system such as the driving motor 13, when the electric motorcycle 1 is driving.

Next, the control of the torque suppressing function after starting (during driving) of the driving motor 13 will be described with reference to a flowchart of Fig. 3.

It is assumed that in the control of the torque suppressing function of Fig. 3, it is determined that the hydraulic circuit 11 including the hydraulic pump 10 and the first hydraulic pressure detecting section 16 are now in normal states, respectively, by the hydraulic circuit inspection function of Fig. 2.

Initially, in step S200, when the pump state determiner section determines whether or not the pump control section is outputting the activation command to the hydraulic pump 10 under a state in which the pump control section is activating the hydraulic pump 10, and determines that the pump control section is outputting the activation command to the hydraulic pump 10 (hydraulic pump 10 is activated), i.e., a result of the determination "YES", the first hydraulic pressure determiner section determines whether or not the value of the hydraulic pressure detected by the first hydraulic pressure detecting section 16 is less than the first allowable value (step S202, step S204).

When the first hydraulic pressure determiner section determines that the value of the hydraulic pressure is equal to or greater than the first allowable value, i.e., a result of the determination "NO", in step S204, it is determined that the hydraulic circuit 11 including the hydraulic pump 10 and the first hydraulic pressure detecting section 16 are in normal states during driving, the warning output section does not output the warning signal, and the display section 12 is OFF, indicating that the hydraulic circuit 11 including the hydraulic pump 10 and the first hydraulic pressure detecting section 16 are in normal states (step S206).

When the first hydraulic pressure determiner section determines that the value of the hydraulic pressure is less than the first allowable value,, i.e., a result of the determination "YES", in step S204, the second hydraulic pressure determiner section determines whether or not the value of the hydraulic pressure detected by the first hydraulic pressure detecting section 16 is less than the second allowable value smaller than the first allowable value (step S210), after a passage of set time (e.g., about 5 seconds are set) required to flow the hydraulic oil to the hydraulic circuit 11 (step S208).

When the second hydraulic pressure determiner section determines that the value of the hydraulic pressure is equal to or greater than the second allowable value, i.e., a result of the determination "NO", in step S210, it is determined that the hydraulic circuit 11 including the hydraulic pump 10 and the like are in abnormal states, and the torque control section executes first torque suppressing control (medium torque suppressing control) for the driving motor 13 (step S212). At this time, the display section 12 displays information indicating that the hydraulic circuit 11 including the hydraulic pump 10 and the like are in abnormal states and the first torque suppressing control is executed. The first torque suppressing control refers to control executed so that maximum output torque which can be output from the driving motor 13 becomes pre-set medium torque which is smaller than normal (rated) maximum output torque.

On the other hand, when the second hydraulic pressure determiner section determines that the value of the hydraulic pressure is less than the second allowable value, i.e., a result of the determination "YES", in step S210, it is determined that the hydraulic circuit 11 including the hydraulic pump 10, and the like are in abnormal states, and the torque control section executes second torque suppressing control (low torque suppressing control) for the driving motor 13 (step S214). At this time, the display section 12 displays information indicating that the hydraulic circuit 11 including the hydraulic pump 10, and the like are in abnormal states and the second torque suppressing control is executed. The second torque suppressing control refers to control executed so that the maximum output torque which can be output from the driving motor 13 becomes pre-set low torque which is smaller than the medium torque.

In accordance with the torque suppressing function shown in the flowchart of Fig. 3, when the value of the hydraulic pressure in the oil passage 14 is between the first allowable value and the second allowable value (step S212), or when the value of the hydraulic pressure is less than the second allowable value (step S214), the torque control section suppresses the maximum output torque of the driving motor 13. This allows the electric motorcycle 1 to drive at a medium speed or a low speed to be transported to, for example, an inspection place, while avoiding occurrence of a failure or an abnormality in the components to be lubricated, such as the driving system.

The torque control section is able to activate the driving motor 13 by properly executing the first torque suppressing control (medium torque suppressing control) or the second torque suppressing control (low torque suppressing control), depending on whether the value of the hydraulic pressure detected by the first hydraulic pressure detecting section 16 falls in a range between the first allowable value and the second allowable value, or a range which is less than the second allowable value.

After a passage of the set time required to flow the hydraulic oil to the hydraulic circuit 11 (step S208), the first hydraulic pressure determiner section determines whether or not the value of the hydraulic pressure detected by the first hydraulic pressure detecting section 16 is less than the first allowable value (step S204). Therefore, when the electric motorcycle 1 starts to move immediately after the hydraulic pump 10 starts to operate, in a case where some time passes from when the hydraulic pump 10 starts to operate until a pressure in the hydraulic circuit 11 reaches a specified pressure, it becomes possible to avoid a situation in which the torque suppressing control is executed even though there is no abnormality in the hydraulic circuit 11, and thereby the driver's acceleration feeling during starting gets worse.

The use of the hydraulic sensor as the first hydraulic pressure detecting section 16 enables various high-level control by utilizing the value of the hydraulic pressure in the oil passage 14 which is detected by the hydraulic sensor, which control cannot not be implemented by a hydraulic pressure switch which outputs only an ON-value or an OFF-value.

For example, as shown in Fig. 3, the first hydraulic pressure determiner section can set two or more allowable values, i.e., the first allowable value and the second allowable value as allowable values used to determine the hydraulic pressure in the oil passage 14. The display section 12 can display the value of the hydraulic pressure in the oil passage 14. Or, the torque generated in the pump motor 15 can be controlled based on the value of the hydraulic pressure. By controlling the torque generated in the pump motor 15 in this way, the hydraulic pressure in the oil passage 14 can be increased up to a proper pressure, or can be decreased to reduce a load of the pump motor 15.

As shown in step S204 and step S210 of Fig. 3, the first and second hydraulic pressure determiner sections can set two or more allowable values which are reference values used to determine the hydraulic pressure in the oil passage 14.

Although the hydraulic sensor is used as the first hydraulic pressure detecting section 16 of Fig. 1, the hydraulic pressure switch may be used in place of the hydraulic sensor. In this case, a second hydraulic pressure switch which is different from the first hydraulic pressure switch, may be attached to the oil passage 14 to detect whether the value of the hydraulic pressure in the oil passage 14 is less than the second allowable value, and may output a detection signal indicating that the hydraulic pressure in the oil passage 14 is less than the second allowable value, in step S210 of Fig. 3.

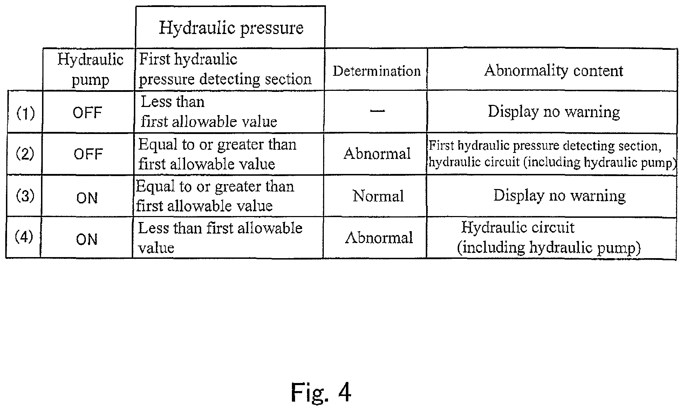

Fig. 4 shows results of inspection performed by the hydraulic circuit inspection function of Fig. 2. When the value of the hydraulic pressure in the hydraulic circuit 11 which is detected by the first hydraulic pressure detecting section 16 is less than the first allowable value (case of (1)), in cases where the hydraulic pump 10 is deactivated (cases (1) and (2)), it is determined that the first hydraulic pressure detecting section 16 is in a normal state, but it is not clear as to whether or not the hydraulic circuit 11 is in a normal state. Therefore, the display section 12 does not display warning information. On the other hand, when the value of the hydraulic pressure in the hydraulic circuit 11 which is detected by the first hydraulic pressure detecting section 16 is equal to or greater than the first allowable value (case of (2)), it is determined that either one or both of the first hydraulic pressure detecting section 16 and the hydraulic circuit 11 is/are in abnormal state(s). The display section 12 displays warning information indicating that either one or both of the first hydraulic pressure detecting section 16 and the hydraulic circuit 11 is/are in abnormal state(s).

When the value of the hydraulic pressure in the hydraulic circuit 11 which is detected by the first hydraulic pressure detecting section 16 is equal to or greater than the first allowable value (case of (3)), in cases where the hydraulic pump 10 is activated (cases (3) and (4)), it is determined that the first hydraulic pressure detecting section 16 and the hydraulic circuit 11 (including the hydraulic pump 10) are in normal states, and the display section 12 does not display warning information and is OFF. On the other hand, when the value of the hydraulic pressure in the hydraulic circuit 11 which is detected by the first hydraulic pressure detecting section 16 is less than the first allowable value (case of (4)), it is determined that either the first hydraulic pressure detecting section 16 or the hydraulic circuit 11 (including the hydraulic pump 10) is in an abnormal state. The display section 12 displays warning information indicating that the first hydraulic pressure detecting section 16 or the hydraulic circuit 11 is in an abnormal state.

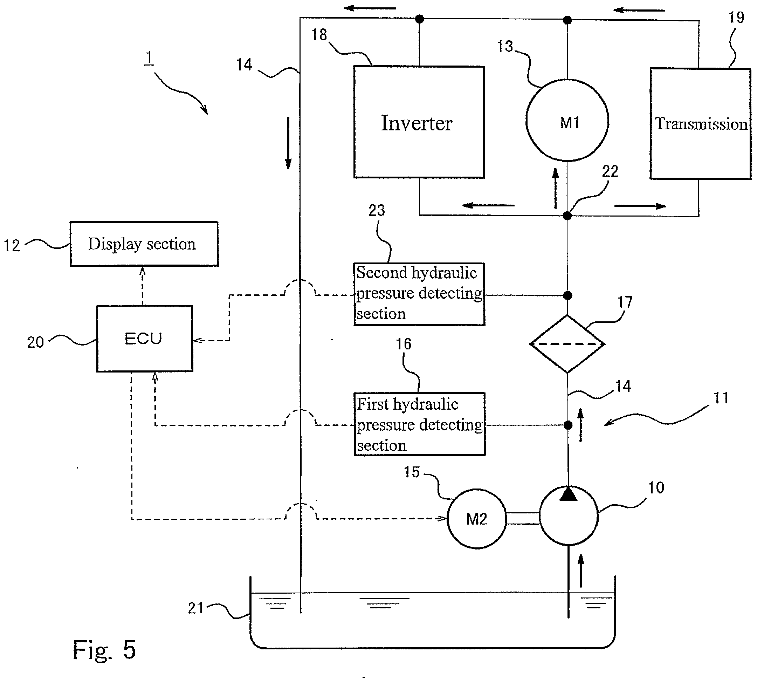

Next, an electric motorcycle according to Embodiment 2 will be described with reference to Figs. 5 to 7. The electric motorcycle 1 of Embodiment 2 of Fig. 5 is different from the electric motorcycle 1 of Embodiment 1 of Fig. 1 in that in Embodiment 1 of Fig. 1, the first hydraulic pressure detecting section 16 is attached to the oil passage 14 at the first mounting position which is between the outlet of the hydraulic pump 10 and the oil filter 17, while in Embodiment 2 of Fig. 5, the first hydraulic pressure detecting section 16 is attached to the oil passage 14 at the first mounting position which is between the outlet of the hydraulic pump 10 and the oil filter 17, and a second hydraulic pressure detecting section 23 is attached to the oil passage 14 at a second mounting position which is between the oil filter 17, and the flow dividing section 22 for feeding the hydraulic oil to the hydraulic oil inlet of the inverter 18, the hydraulic oil inlet of the driving motor 13 and the hydraulic oil inlet of the transmission 19.

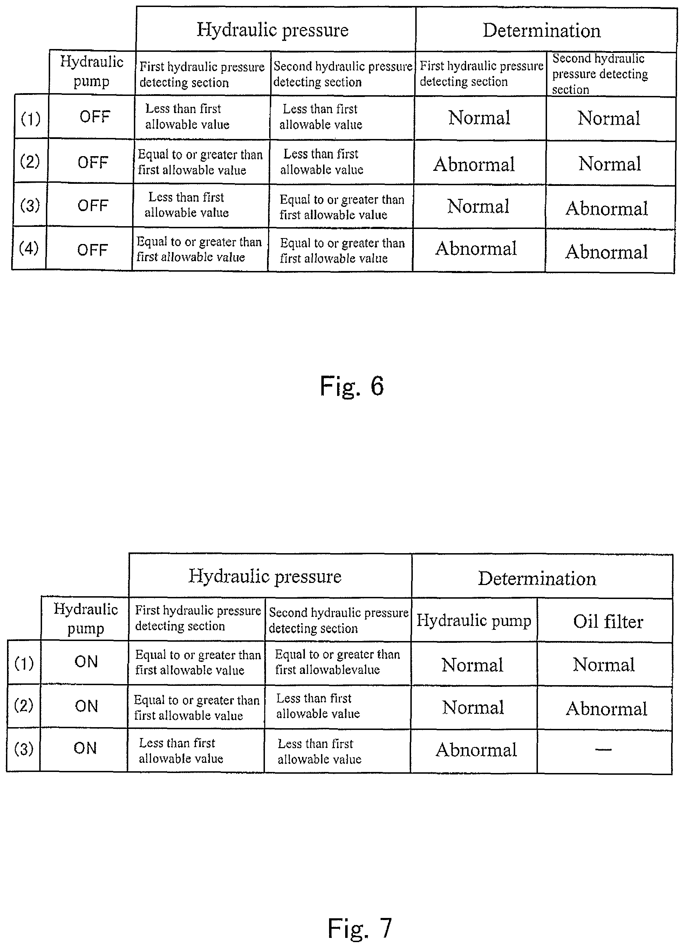

The two hydraulic pressure detecting sections, which are the first hydraulic pressure detecting section 16 and the second hydraulic pressure detecting section 23 are provided, in order to individually detect an abnormality in the hydraulic pump 10 and an abnormality in the oil filter 17 before starting (driving) as shown in Figs. 6 and 7, in addition to performing the above stated inspection function of the hydraulic circuit of Embodiment 1. In the present embodiment, an abnormality in the first hydraulic pressure detecting section 16 and an abnormality in the second hydraulic pressure detecting section 23 can be individually detected.

Fig. 6 shows an inspection method for determining whether the first hydraulic pressure detecting section 16 and the second hydraulic pressure detecting section 23 are in a normal state or in an abnormal state, during starting (before driving). When the hydraulic pump 10 is not activated and each of the first hydraulic pressure detecting section 16 and the second hydraulic pressure detecting section 23 is detecting the value of the hydraulic pressure which is less than the first allowable value (case (1)), it can be determined that both of the first hydraulic pressure detecting section 16 and the second hydraulic pressure detecting section 23 are in normal states. The display section 12 does not display warning information corresponding to the first hydraulic pressure detecting section 16 and the second hydraulic pressure detecting section 23 determined as normal states, and therefore is OFF.

On the other hand, when either one or both of the first hydraulic pressure detecting section 16 and the second hydraulic pressure detecting section 23 is/are detecting the value of the hydraulic pressure which is/are equal to or greater than the first allowable value, it can be determined that the hydraulic pressure detecting section(s) which has (have) detected the value is/are in abnormal state(s) (cases (2), (3), (4)). The display section 12 displays a result of this determination and is turned ON. The first hydraulic pressure determiner section determines whether or not either one or both of the first and second hydraulic pressure detecting sections 16, 23 is/are detecting the hydraulic pressure which is less than the first allowable value.

Fig. 7 shows a method of inspection performed to determine whether each of the hydraulic pump 10 and the oil filter 17 is in a normal state or in an abnormal state, during starting (before driving), subsequently to a case where it is determined that both of the first hydraulic pressure detecting section 16 and the second hydraulic pressure detecting section 23 are in normal states, in the example of Fig. 6. When the hydraulic pump 10 is activated and both of the first hydraulic pressure detecting section 16 and the second hydraulic pressure detecting section 23 are detecting the value of the hydraulic pressure which is equal to or greater than the first allowable value (case (1)), it can be determined that both of the hydraulic pump 10 and the oil filter 17 are in normal states. The display section 12 does not display warning information corresponding to the hydraulic pump 10 and the oil filter 17 determined as normal states, and therefore is OFF.

On the other hand, when the first hydraulic pressure detecting section 16 is detecting the value of the hydraulic pressure which is equal to or greater than the first allowable value, but the second hydraulic pressure detecting section 23 is detecting the value of the hydraulic pressure which is less than the first allowable value, as in case (2) of Fig. 7, it is determined that the hydraulic pump 10 is in a normal state but the oil filter 17 is in an abnormal state, due to clogging, or the like. The display section 12 displays information indicating that there is an abnormality in the oil filter 17, as a result of the determination, by turning on the display part corresponding to the oil filter 17.

When both of the first hydraulic pressure detecting section 16 and the second hydraulic pressure detecting section 23 are detecting the value of the hydraulic pressure which is less than the first allowable value, as in case (3) of Fig. 7, it is determined that the hydraulic pump 10 is in an abnormal state. The display section 12 displays information indicating that there is an abnormality in the hydraulic pump 10, as a result of the determination, by turning on the display part corresponding to the hydraulic pump 10. However, it cannot be determined whether the oil filter 17 is in a normal state or in an abnormal state, and therefore the display part 12 corresponding to the oil filter 17 is OFF.

Although in Embodiment 2, the hydraulic sensors are used as the first hydraulic pressure detecting section 16 and the second hydraulic pressure detecting section 23 of Fig. 5, the hydraulic pressure switches may be used in place of the hydraulic sensors. In this case, as described in Embodiment 1, the second hydraulic pressure switch which is different from the first hydraulic pressure switch, may be attached to the oil passage 14 to detect whether or not the value of the hydraulic pressure in the oil passage 14 is less than the second allowable value, and may output a detection signal indicating whether or not the value of the hydraulic pressure in the oil passage 14 is less than the second allowable value, in step S210 of Fig.3.

Although in the above described embodiments, the first torque suppressing control (step S212) and the second torque suppressing control (step S214) are performed in the control performed by the torque suppressing function of Fig. 3, only either one of the first torque suppressing control and the second torque suppressing control may alternatively be performed. In a further alterative, torque suppressing control at three or more levels may be performed. For example, torque suppressing control at three levels, which are medium torque suppressing control, low torque suppressing control and super-low torque suppressing control, may be performed.

Although the allowable value of the hydraulic pressure in step S102 of Fig. 2 match the allowable value of the hydraulic pressure in step S204 of Fig. 3 as the first allowable value, these allowable values may be different from each other.

As shown in Fig. 3, the torque control section of the above described embodiments executes control such that the maximum output torque becomes the first (medium) torque when the value of the hydraulic pressure in the oil pressure 14 which is detected by the first hydraulic pressure detecting section 16 falls in the range between the first allowable value and the second allowable value (step S212), and executes control such that the maximum output torque becomes the second (low) torque when the value of the hydraulic pressure in the oil pressure 14 which is detected by the first hydraulic pressure detecting section 16 is less than the second allowable value (step S214). Alternatively, the torque control section may execute control such that the maximum output torque decreases as the value of the hydraulic pressure in the oil passage 14 which is detected by the first hydraulic pressure detecting section 16 decreases.

Or, in a case where the maximum output torque corresponding to the abnormal state is set by multiplying normal (rated) maximum output torque by a torque suppressing coefficient a (0 < a < 1), the torque suppressing coefficient a may be set such that it decreases as the value of the hydraulic pressure in the oil passage 14 which is detected by the first hydraulic pressure detecting section 16 decreases. In this setting, the degree to which the torque is suppressed can be increased according to the degree to which the hydraulic pressure decreases. Thus, the driving motor 10 can be controlled properly. In this way, also, the electric motorcycle 1 is allowed to drive at a low speed and transported to, for example, the inspection place, while avoiding occurrence of a failure or an abnormality in the components to be lubricated.

Although in the above described embodiments, the hydraulic pump 10 is activated by the pump motor 15 which is different from the driving motor 13, it may be activated by the driving motor 13. In this case, for example, a clutch mechanism may be provided to allow the driving motor 13 to activate both of the wheel and the hydraulic pump 10 or only the hydraulic pump 10.

Although in the above described embodiments, the first hydraulic pressure detecting section 16 is attached to the oil passage 14 at the first mounting position which is between the hydraulic pump 10 and the oil filter 17, as shown in Fig. 1, it may be attached to the oil passage 14 at a position other than the first mounting position. For example, the first hydraulic pressure detecting section 16 may be attached to the oil passage 14 at the second mounting position which is between the oil filter 17 and the flow dividing section 22.

### Industrial Applicability

As should be appreciated from the above, the electric motorcycle of the present invention can achieve remarkable advantages that when a hydraulic pump is deactivated in a normal state and a hydraulic pressure in an oil passage is decreased, for example, before driving, warning information which warns about a decrease in the hydraulic pressure is not output, and is suitably applied to such an electric motorcycle.

### Reference Signs List

- 1: electric motorcycle
- 10: hydraulic pump
- 11: hydraulic circuit
- 12: display section
- 13: driving motor
- 14: oil passage
- 15: pump motor
- 16: first hydraulic pressure detecting section
- 17: oil filter
- 18: inverter
- 19: transmission
- 20: ECU
- 21: oil pan
- 22: flow dividing section
- 23: second hydraulic pressure detecting section

## Claims

1. An electric motorcycle (1) comprising:
a hydraulic pump (10) ;
an oil passage through which oil forcibly fed by the hydraulic pump flows:
a hydraulic pressure detecting device (16,23) for detecting a hydraulic pressure in the oil passage;
a hydraulic pressure determiner unit for determining whether or not a value of the hydraulic pressure detected by the hydraulic pressure detecting device is less than a first allowable value;
a pump state determiner unit for determining whether or not an activation command is output to the hydraulic pump; and
a warning output device for outputting a warning signal according to a result of the determination performed by the hydraulic pressure determiner unit and a result of the determination performed by the pump state determiner unit;
wherein the warning output device does not output the warning signal when the pump state determiner unit determines that the activation command is not output to the hydraulic pump and the hydraulic pressure determiner unit determines that the value of the hydraulic pressure in the oil passage is less than the first allowable value; and
wherein the warning output device outputs the warning signal when the pump state determiner unit determines that the activation command is output to the hydraulic pump and the hydraulic pressure determiner unit determines that the value of the hydraulic pressure in the oil passage is less than the first allowable value.

2. The electric motorcycle according to claim 1, comprising:
a pump control unit for controlling activation of the hydraulic pump;
wherein the pump control unit activates the hydraulic pump before driving; and
wherein the hydraulic pressure determiner unit determines whether or not the value of the hydraulic pressure in the oil passage is less than the first allowable value, after the hydraulic pump is activated.

3. The electric motorcycle according to claim 1,
wherein the hydraulic pressure detecting device is a hydraulic sensor; and
wherein the hydraulic pressure determiner unit determines whether or not the value of the hydraulic pressure in the oil passage is less than the first allowable value, based on a value of the hydraulic pressure detected by the hydraulic pressure detecting device.

4. The electric motorcycle according to claim 1,
wherein the oil passage connected to an outlet of the hydraulic pump is provided with a filter, and a hydraulic oil inlet of the driving motor or a hydraulic oil inlet of a transmission in this order from an upstream side; and
wherein the hydraulic pressure detecting device is provided at either one of or both of a first mounting position which is between the outlet of the hydraulic pump and the filter and a second mounting position which is between the filter and the hydraulic oil inlet.

5. The electric motorcycle according to claim 1, comprising:
a second hydraulic pressure determiner unit for determining whether or not the value of the hydraulic pressure in the oil passage is less than a second allowable value; and
a torque control unit for suppressing torque of the driving motor when the second hydraulic pressure determiner unit determines that the value of the hydraulic pressure in the oil passage is less than the second allowable value.

6. The electric motorcycle according to claim 5,
wherein the hydraulic pressure detecting device is a hydraulic sensor; and
wherein the torque control unit decides a degree to which the torque is suppressed based on a value of the hydraulic pressure detected by the hydraulic pressure detecting device.

7. The electric motorcycle according to claim 5,
wherein the oil passage is a passage used to lubricate or cool a driving system; and
wherein the torque control unit inhibits the torque from being suppressed, before a predetermined time passes after the hydraulic pump starts to operate.

## Patentansprüche

1. Elektromotorrad (1), das Folgendes umfasst:
eine Hydraulikpumpe (10);
einen Ölkanal, durch den Öl strömt, das durch die Hydraulikpumpe mit Druck zugeführt wird;
eine Hydraulikdruckdetektionsvorrichtung (16, 23) zum Detektieren eines Hydraulikdrucks im Ölkanal;
eine Hydraulikdruckbestimmungseinheit zum Bestimmen, ob ein Wert des Hydraulikdrucks, der durch die Hydraulikdruckdetektionsvorrichtung detektiert wird, kleiner als ein erster zulässiger Wert ist oder nicht;
eine Pumpenzustandsbestimmungseinheit zum Bestimmen, ob ein Aktivierungsbefehl an die Hydraulikpumpe ausgegeben wird oder nicht; und
eine Warnausgabevorrichtung zum Ausgeben eines Warnsignals gemäß einem Ergebnis der Bestimmung, die durch die Hydraulikdruckbestimmungseinheit durchgeführt wird, und einem Ergebnis der Bestimmung, die durch die Pumpenzustandsbestimmungseinheit durchgeführt wird;
wobei die Warnausgabevorrichtung das Warnsignal nicht ausgibt, wenn die Pumpenzustandsbestimmungseinheit bestimmt, dass der Aktivierungsbefehl nicht an die Hydraulikpumpe ausgegeben wird, und die Hydraulikdruckbestimmungseinheit bestimmt, dass der Wert des Hydraulikdrucks im Ölkanal kleiner als der erste zulässige Wert ist; und
wobei die Warnausgabevorrichtung das Warnsignal ausgibt, wenn die Pumpenzustandsbestimmungseinheit bestimmt, dass der Aktivierungsbefehl an die Hydraulikpumpe ausgegeben wird, und die Hydraulikdruckbestimmungseinheit bestimmt, dass der Wert des Hydraulikdrucks im Ölkanal kleiner als der erste zulässige Wert ist.

2. Elektromotorrad nach Anspruch 1, das Folgendes umfasst:
eine Pumpensteuereinheit zum Steuern der Aktivierung der Hydraulikpumpe;
wobei die Pumpensteuereinheit die Hydraulikpumpe vor dem Fahren aktiviert; und
wobei die Hydraulikdruckbestimmungseinheit bestimmt, ob der Wert des Hydraulikdrucks im Ölkanal kleiner als der erste zulässige Wert ist oder nicht, nachdem die Hydraulikpumpe aktiviert wurde.

3. Elektromotorrad nach Anspruch 1,
wobei die Hydraulikdruckdetektionsvorrichtung ein Hydrauliksensor ist; und
wobei die Hydraulikdruckbestimmungseinheit auf der Basis eines Wertes des Hydraulikdrucks, der durch die Hydraulikdruckdetektionsvorrichtung detektiert wird, bestimmt, ob der Wert des Hydraulikdrucks im Ölkanal kleiner als der erste zulässige Wert ist oder nicht.

4. Elektromotorrad nach Anspruch 1,
wobei der Ölkanal, der mit einem Auslass der Hydraulikpumpe verbunden ist, mit einem Filter und einem Hydrauliköleinlass des Antriebsmotors oder einem Hydrauliköleinlass eines Getriebes in dieser Reihenfolge ausgehend von einer Stromaufwärtsseite versehen ist; und
wobei die Hydraulikdruckdetektionsvorrichtung in einer einer ersten Befestigungsposition, die sich zwischen dem Auslass der Hydraulikpumpe und dem Filter befindet, und/oder einer zweiten Befestigungsposition, die sich zwischen dem Filter und dem Hydrauliköleinlass befindet, vorgesehen ist.

5. Elektromotorrad nach Anspruch 1, das Folgendes umfasst:
eine zweite Hydraulikdruckbestimmungseinheit zum Bestimmen, ob der Wert des Hydraulikdrucks im Ölkanal kleiner als ein zweiter zulässiger Wert ist oder nicht; und
eine Drehmomentsteuereinheit zum Unterdrücken des Drehmoments des Antriebsmotors, wenn die zweite Hydraulikdruckbestimmungseinheit bestimmt, dass der Wert des Hydraulikdrucks im Ölkanal kleiner als der zweite zulässige Wert ist.

6. Elektromotorrad nach Anspruch 5,
wobei die Hydraulikdruckdetektionsvorrichtung ein Hydrauliksensor ist; und
wobei die Drehmomentsteuereinheit auf der Basis eines Wertes des Hydraulikdrucks, der durch die Hydraulikdruckdetektionsvorrichtung detektiert wird, ein Maß bestimmt, auf das das Drehmoment unterdrückt wird.

7. Elektromotorrad nach Anspruch 5,
wobei der Ölkanal ein Kanal ist, der verwendet wird, um ein Antriebssystem zu schmieren oder zu kühlen; und
wobei die Drehmomentsteuereinheit verhindert, dass das Drehmoment unterdrückt wird, bevor eine vorgegebene Zeit verstrichen ist, nachdem die Hydraulikpumpe zu arbeiten begonnen hat.

## Revendications

1. Motocycle électrique (1) comprenant :
une pompe hydraulique (10) ;
un passage d'huile à travers lequel circule de l'huile introduite de force par la pompe hydraulique ;
un dispositif de détection de pression hydraulique (16, 23) pour détecter une pression hydraulique dans le passage d'huile ;
une unité de détermination de pression hydraulique pour déterminer si une valeur de la pression hydraulique détectée par le dispositif de détection de pression hydraulique est inférieure ou non à une première valeur admissible ;
une unité de détermination d'état de pompe pour déterminer si une commande d'activation est délivrée ou non à la pompe hydraulique ; et
un dispositif de délivrance d'avertissement pour délivrer un signal d'avertissement en fonction d'un résultat de la détermination effectuée par l'unité de détermination de pression hydraulique et d'un résultat de la détermination effectuée par l'unité de détermination d'état de pompe ;
dans lequel le dispositif de délivrance d'avertissement ne délivre pas le signal d'avertissement quand l'unité de détermination d'état de pompe détermine que la commande d'activation n'est pas délivrée à la pompe hydraulique et l'unité de détermination de pression hydraulique détermine que la valeur de la pression hydraulique dans le passage d'huile est inférieure à la première valeur admissible ; et
dans lequel le dispositif de délivrance d'avertissement délivre le signal d'avertissement quand l'unité de détermination d'état de pompe détermine que la commande d'activation est délivrée à la pompe hydraulique et l'unité de détermination de pression hydraulique détermine que la valeur de la pression hydraulique dans le passage d'huile est inférieure à la première valeur admissible.

2. Motocycle électrique selon la revendication 1, comprenant :
une unité de commande de pompe pour commander l'activation de la pompe hydraulique ;
dans lequel l'unité de commande de pompe active la pompe hydraulique avant de rouler ; et
dans lequel l'unité de détermination de pression hydraulique détermine si la valeur de la pression hydraulique dans le passage d'huile est inférieure ou non à la première valeur admissible, après que la pompe hydraulique a été activée.

3. Motocycle électrique selon la revendication 1,
dans lequel le dispositif de détection de pression hydraulique est un capteur hydraulique ; et
dans lequel l'unité de détermination de pression hydraulique détermine si la valeur de la pression hydraulique dans le passage d'huile est inférieure ou non à la première valeur admissible, sur la base d'une valeur de la pression hydraulique détectée par le dispositif de détection de pression hydraulique.

4. Motocycle électrique selon la revendication 1,
dans lequel le passage d'huile raccordé à une sortie de la pompe hydraulique est pourvu d'un filtre, et d'une entrée d'huile hydraulique du moteur d'entraînement ou d'une entrée d'huile hydraulique d'une transmission dans cet ordre depuis un côté amont ; et
dans lequel le dispositif de détection de pression hydraulique est disposé à une première position de montage qui se situe entre la sortie de la pompe hydraulique et le filtre et/ou une deuxième position de montage qui se situe entre le filtre et l'entrée d'huile hydraulique.

5. Motocycle électrique selon la revendication 1, comprenant :
une deuxième unité de détermination de pression hydraulique pour déterminer si la valeur de la pression hydraulique dans le passage d'huile est inférieure ou non à une deuxième valeur admissible ; et
une unité de commande de couple pour supprimer le couple du moteur d'entraînement quand la deuxième unité de détermination de pression hydraulique détermine que la valeur de la pression hydraulique dans le passage d'huile est inférieure à la deuxième valeur admissible.

6. Motocycle électrique selon la revendication 5,
dans lequel le dispositif de détection de pression hydraulique est un capteur hydraulique ; et
dans lequel l'unité de commande de couple décide d'un degré auquel le couple est supprimé sur la base d'une valeur de la pression hydraulique détectée par le dispositif de détection de pression hydraulique.

7. Motocycle électrique selon la revendication 5,
dans lequel le passage d'huile est un passage utilisé pour lubrifier ou refroidir un système d'entrainement ; et
dans lequel l'unité de commande de couple empêche le couple d'être supprimé avant que s'écoule un temps prédéterminé après que la pompe hydraulique a commencé à fonctionner.
